# EUROPEAN PATENT SPECIFICATION

(11) **EP 0 412 316 B1**
(45) Date of publication and mention of the grant of the patent: **22.05.1996**
(21) Application number: 90113539.2
(22) Date of filing: 14.07.1990
(51) Int. Cl.: G06K 19/16

(54) **Authenticity identifying system for information storage cards**
Echtheitserkennungseinrichtung für Informationsspeicherkarten
Système d'identification de l'authenticité pour cartes de stockage d'informations

(30) Priority: 11.08.1989 JP 209065/89; 11.08.1989 JP 209066/89; 11.08.1989 JP 209067/89; 11.08.1989 JP 209068/89; 30.11.1989 JP 311422/89
(43) Date of publication of application: 13.02.1991
(73) Proprietor: NHK SPRING COMPANY LIMITED, Yokohama-shi Kanagawa-ken (JP)
(72) Inventor: Nishikuma, Hiroaki, C/o NHK Spring Co., Ltd., Yokohama-shi, Kanagawa-ken (JP); Hoshino, Hidekazu, C/o NHK Spring Co., Ltd., Yokohama-shi, Kanagawa-ken (JP); Seki, Yoshiaki, C/o NHK Spring Co., Ltd., Yokohama-shi, Kanagawa-ken (JP)
(74) Representative: Weitzel, Wolfgang, Dr.-Ing.

(56) References cited:
- EP-A- 0 015 307
- EP-A- 0 075 674
- EP-A- 0 077 917
- WO-A-86/05300
- DE-A- 2 659 639
- US-A- 4 641 017

## Description

### TECHNICAL FIELD

The present invention relates to a system for determining or identifying authenticity of information storage cards by means of a reader/writer to prevent unauthorized fabrication and alteration of such cards. The information storage cards include, not exclusively, magnetic cards, IC cards, optical cards and so on which are capable of exchanging information with reader/writers. The present invention also relates to such cards provided with an identification region which cannot be easily duplicated but can be easily identified without requiring any undue complication of the card reader/writers.

### BACKGROUND OF THE INVENTION

Conventionally, to the end of preventing the forgery of, for instance, a magnetic card, it has been practiced to use a laminated structure for its magnetic layer, and to punch holes in the magnetic card when the magnetic card is not intended for repeated use. However, such structures can be duplicated and deceived by the forgers with relative ease, and may not be sufficient to discourage attempts to illegally duplicate and alter the card. The internal structure of the card may be made more complex by known means, but it will lead to the complication and cost increase of the reader/writers for reading and writing information into and out of the card.

Additional problem which is expected to be encountered in preventing forgery of such information storage cards is that a forger may obtain an information storage card which has been totally spent and discarded and, since the remanining value of the card is recorded as part of its information, the forger may attempt to rewrite the information stored in the card with deceitful intent. In this case, it is not possible to prevent illegal or unauthorized use of the card by any ordinary means.

US-A 4 641 017 describes a system for determining authenticity of an information storage card.

Other systems for determining authenticity of an information storage card are disclosed by EP-A-0 75 674, DE-A-2 659 639, EP-A-0 15 307 and WO-A-8 605 300. Most of these documents suggest the use of the spatial angle of diffracted or reflected light.

EP-A-0 077 917, illustrates a system for determining authenticity in accordance with claim 1, the system comprising a microstructure 2, upon which a number of light beans are insiding. A position sensor 22 senses two out of four light beans, and a second sensor senses the position of two further out of the said four light beans, whereby the second pair of light beams is reflected.

In view of such problems of the prior art, a primary object of the present invention is to provide a system for determining authenticity of an information storage card by certain identification means which is hard to duplicate for any unauthorized person but can be easily identified with a card reader/writer without increasing its complexity.

A second object of the present invention is to provide a system for determining authenticity of an information storage card which prevents unauthorized rewriting of the information carried by an authentic card with deceitful intent.

A third object of the present invention is to provide an information storage card which is suitable for use in such a system.

These objects are achieved by the system of claim 1.

### BRIEF DESCRIPTION OF THE DRAWINGS

The following description with reference to the appended drawings is considered useful for understanding the invention.
Figure 1 is a perspective view of a card and an essential part of a card reader/writer
Figures 2 and 3 are similar perspective views employing holograph regions;
Figures 4 and 5 are similar perspective views in two different conditions;
Figure 6 is a view similar to Figures 4 and 5 directed to the additional feature of destroying certain parts of an identification region as required;
Figures 7 through 9 are fragmentary sectional views illustrating the operation of the system in Figure 6;
Figure 10 is a view similar to Figure 8;
Figures 11 through 13 are perspective views employing diffraction grating regions;
Figure 14 is a perspective view showing a first embodiment of the present invention employing a large number of fine grooves formed on the information storage card;
Figure 15 is an enlarged plan view of the identification region shown in Figure 14;
Figure 16 is an enlarged sectional view taken along line XVI-XVI of Figure 15;
Figure 17 is an end view as seen in the direction of arrows XVII-XVII of Figure 14;
Figure 18 is a view similar to Figure 17 showing a second embodiment of the present invention;
Figure 19 is a view similar to Figure 15 showing a third embodiment of the present invention;
Figure 20 is a view similar to Figure 17 showing a light receiving element for the third embodiment of the present invention;
Figures 21 and 22 are views similar to Figure 20 showing a light receiving element for a fourth embodiment of the present invention employing a large number of parallel grooves in two different conditions; and
Figures 23 and 24 are views similar to Figures 21 and 22, respectively, for the fourth embodiment of the present invention in which a diffraction grating region is used instead of a large number of parallel grooves.

### DETAILED DESCRIPTION OF THE PREFERRED EMBODIMENTS

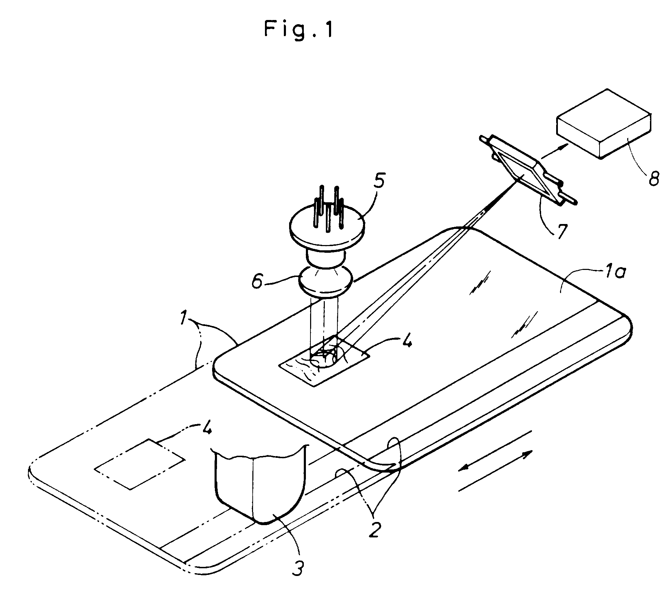

Figure 1 is a schematic perspective view of a magnetic card 1 which is being processed by a card reader/writer having means for identifying the authenticity of the card. The card 1 is conveyed in the direction indicated by the arrows or substantially laterally as seen in Figure 1 by means of conveyer rollers or the like not shown in the drawings, and a magnetic head 3 writes into and reads out of a magnetic stripe 2 provided on a major surface 1a of the card 1 when it has reached such a position.

A holograph region 4 is provided on a suitable location of the major surface 1a of the card 1. This holograph region 4 consists of a reflective holograph having such a reflection property that incident light having a certain wave length and projected perpendicularly upon the holograph is reflected in a certain prescribed direction.

The reader/writer is provided with a light emitting element 5 as a means for projecting laser light perpendicularly upon the major surface 1a of the card 1, in particular upon the holograph region 4, from a certain distance away therefrom. A lens 6 is interposed between the holograph region 4 and the light emitting element 5 to convert the light emitted from the light emitting element 5 into a parallel beam of light directed upon the holograph region 4. Further, a light receiving element 7 consisting of a photodiode is disposed at a position for receiving the light emitted from the light emitting element 5 and reflected by the holograph region 4. An identification circuit 8 is connected to the light receiving element 7 to determine the authenticity of each card.

In carrying out such a card identification process, the card 1 inserted in the card reader/writer is retained perpendicularly to the illuminating light beam from light emitting element 5, and the illuminating light or the incident light from the light emitting element 5 is projected upon the holograph region 4. The authenticity of the card 1 can be identified when the light reflected by the holograph region 4 is collected by the light receiving element 7, and its intensity is detected to be of a certain level by the identification circuit 8. Therefore, even when a forger obtained such a card, not only it would be difficult for him to analyze and duplicate the holograph but also a significant cost is required to fabricate an identical holograph. Thereby, it offers a strong discouraging effect upon potential forgers.

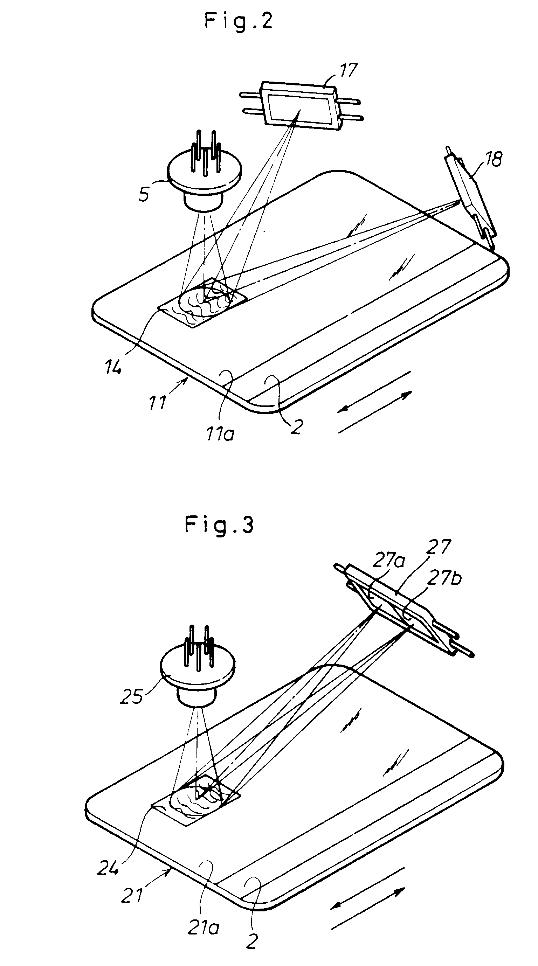

Figure 2 is a view similar to Figure 1, and like parts in these drawings are denoted with like numerals without repeating detailed description thereof. Also, it should be understood that in the following disclosure some of the parts of the system such as the magnetic head 3 and the identification circuit 8 are not illustrated to avoid crowding of the drawings.

According to this system, a holograph region 14 provided on a major surface 11a of a card 11 reflects and directs the light emitting from a light emitting element 5 to two points. Light receiving elements 17 and 18 are provided in the positions of the card reader/writer corresponding to these points. The incident light from the light emitting element 5 consists of simple diverging light in this case, but may also consist of a parallel beam of light. According to this system, the illuminating light issued from the light emitting element 5 and projected upon the holograph region 14 is received by the light receiving elements 17 and 18, and the card 11 is identified to be authentic only when the intensities of the light received by the light receiving elements 17 and 18, respectively, are both higher than a certain prescribed level. Therefore, this system is even more effective than that of Figure 1 in preventing forgery of the card. This system is otherwise similar to that shown in Figure 1.

Figure 3 is a view similar to Figures 1 and 2. In this system, the light emitting element 25 incorporates therein a pair of light sources having different wave lengths, and for instance may consist of a device including a plurality of chips such as a two-wave length laser device having two light emitting surfaces in a single package. The holograph region 24 provided on the major surface 21a of the card 21 is likewise designed to converge light upon two different points according to the difference in wave length. Further, the light receiving element 27, for instance, consists of a divided diode and is provided with a pair of light receiving surfaces 27a and 27b which are located so as to correspond to the two points upon which the light converges. Thus, the illuminating light issued from the light emitting element 25 and projected upon the holograph region 24 is received by the respective light receiving surfaces 27a and 27b, and the card 21 is identified to be authentic only when the intensities of the light received by the light receiving surfaces 27a and 27b, respectively, are both higher than a certain prescribed level. This system is otherwise similar to those depicted in Figure 1 and 2.

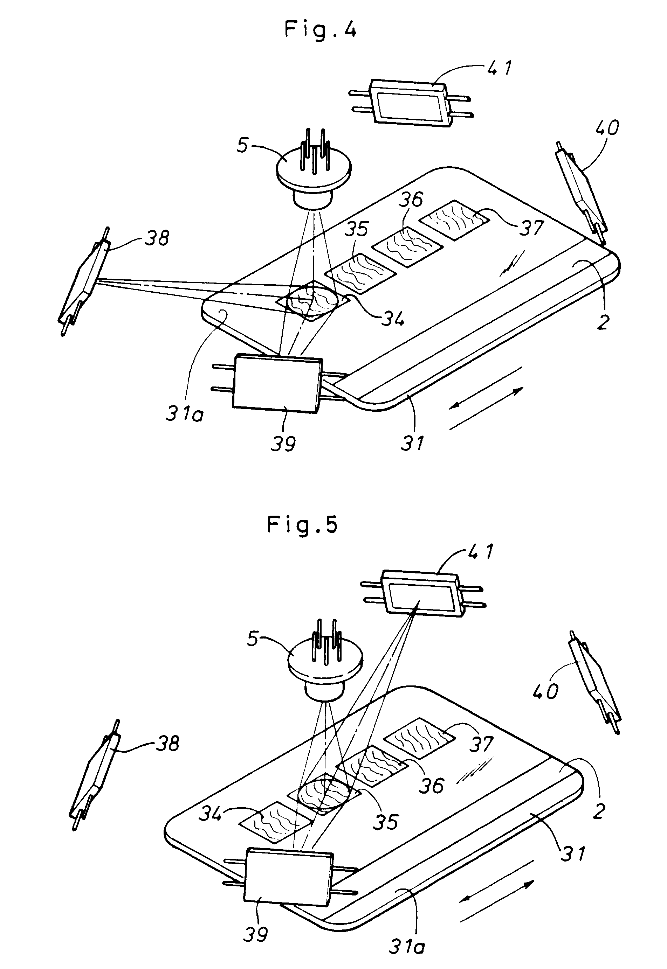

Figures 4 and 5 show a further system in which four holograph regions 34 through 37 are provided on the major surface 31a of the card 31. These holograph regions 34 through 37 are so disposed that each of the holograph regions 34 through 37 reflects the illuminating light from the light emitting element 5 and converges it upon two different points, and these points may be different from one holograph region to another. And, four light receiving elements 38 through 41 are arranged at such points. For instance, as shown in Figure 4, the first holograph region 34 reflects the illuminating light from the light emitting element 5, and converges it upon the light receiving elements 38 and 39, but, as shown in Figure 5, the second holograph region 35 reflects the illuminating light from the light emitting element 5, and converges it upon the light receiving elements 39 and 41, instead of the light receiving elements 38 and 39. Each of the other holograph regions 36 and 37 likewise reflects the illuminating light, and converge it upon associated two of the light receiving elements 38 through 41.

According to this system, not only the forgery of the card is made even more difficult but also other applications are made possible. For instance, the reflected light from the holograph regions may be used as a coded signal associated with the condition of the card, or, alternatively, one of the holograph regions may be actually used for identifying the authenticity of the card while the other holograph regions are used for camouflage or a cover.

The light receiving elements 38 through 41 consisted of individual light receiving elements in the foregoing embodiment, but may also consist of a single multi-region photodiode. The number of the holograph regions and the number of the light receiving elements are not limited to four, and it is also possible to provide a desired number of holograph regions having different reflection properties on the surface of the card, and a corresponding number of light receiving units on the side of the card reader/writer.

Thus, according to the systems shown in Figures 1-5, a holograph region having a unique reflection property was formed on the surface of the card, illuminating light was projected upon this holograph region by way of a reader/writer, reflected light was received by light receiving means at a prescribed position, and the authenticity of the card was determined by the intensity of this reflected light. Therefore, analysis of the holograph is so difficult and duplication of the card is so expensive that the forgery of the card is rendered substantially impossible. Further, since identification of the card can be carried out simply by projecting illuminating light upon the holograph region and detecting the intensity of the reflected light, the equipment which is required to be added to the reader/writer does not increase either its size or its complexity to any significant extent.

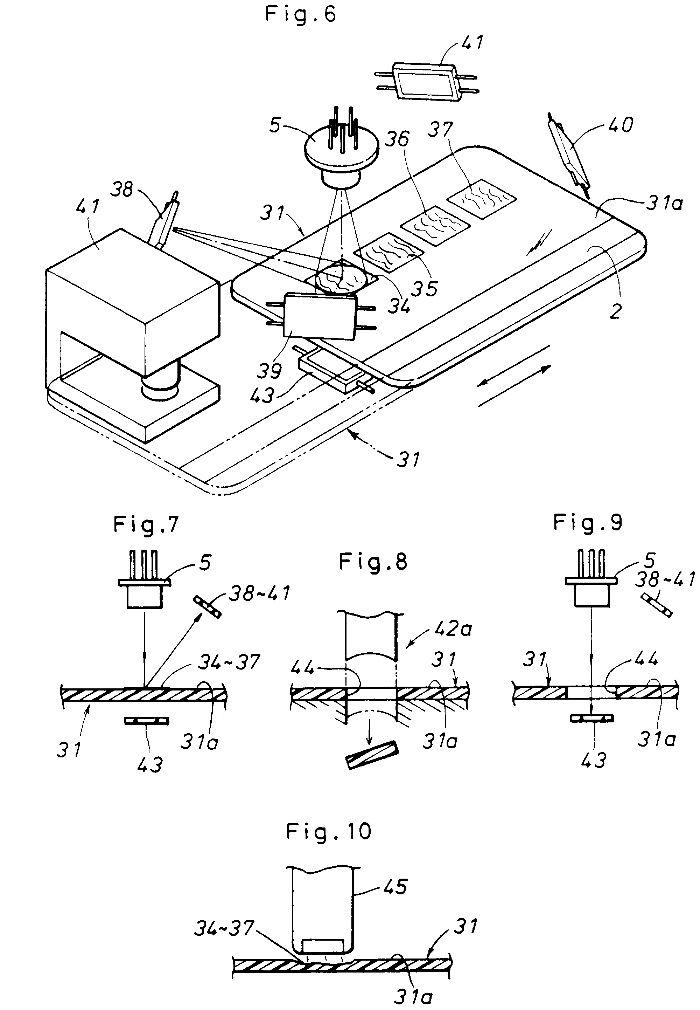

Figures 6 through 9 show a further system which is similar to the system illustrated in Figures 4 and 5 but is provided with an additional feature. In this system, a punching unit 41 is provided in such a position as to be able to oppose each of the identification regions 34 through 37 as the card 31 is being conveyed and punch a hole in each of the identification regions 34 through 37 as required. An additional light receiving element 43 is provided so as to oppose the light emitting element 5 from the other side of the card 31 for confirming if a hole has been punched out by the punching unit 41 by cooperation with the light emitting element 5.

In this embodiment, the card 31 consists of a card carrying a value which is reduced by each use until the value is totally spent and the card is rendered unusable. The information on the value which the card retains is recorded as a part of the information stored in the magnetic stripe 2. When the card 31 is used by a certain amount, for instance making a purchase of goods worth a certain amount of money, a hole 44 is punched out in the identification region 34 of the card 31 by the punch 41a of the punching unit 41 as shown in Figure 8. Thereafter, the card 31 moves to a position at which the hole 44 and the light emitting element 5 oppose each other as shown in Figure 9, and it is determined if a hole has been punched out in the identification region 34 for the purpose of erasing this identification region 34 by projecting illuminating light from the light emitting element 5 upon the light receiving element 43 through the hole 44. As the value of the card diminishes by each prescribed amount, the associated identification regions 34 through 37 are thus erased in a sequential manner. Figure 7 illustrates the condition in which the light receiving elements 38 through 41 receive light reflected by the holograph region but the light receiving element 43 does not receive light from the light emitting element 5 by being obstructed by the holograph region.

Therefore, even when an attempt is made to rewrite the contents of the information stored in a spent magnetic card with the intention to increase its value, since the identification regions have already been erased, it is not identified as an authentic card, and is therefore unusable. Since the erased parts contain holograph regions which are not easy to duplicate, deceitful use of the card is not possible simply by the patching of the erased parts, and an effective prevention of such rewriting of information storage cards is made possible.

Figure 10 is a view similar to Figure 8 showing a still further system in which the identification regions 34 through 37 are erased by heating and melting them with a thermal head 45. This system is otherwise similar to that shown in Figure 6.

Thus, according to the systems shown in Figures 6 and 10 unauthorized rewriting of the carrier of information of a card can be effectively prevented using a simple structure since the card can be made unusable when the card is spent and discarded, and unauthorized rewriting of the information stored in the card is not enough to make the card usable.

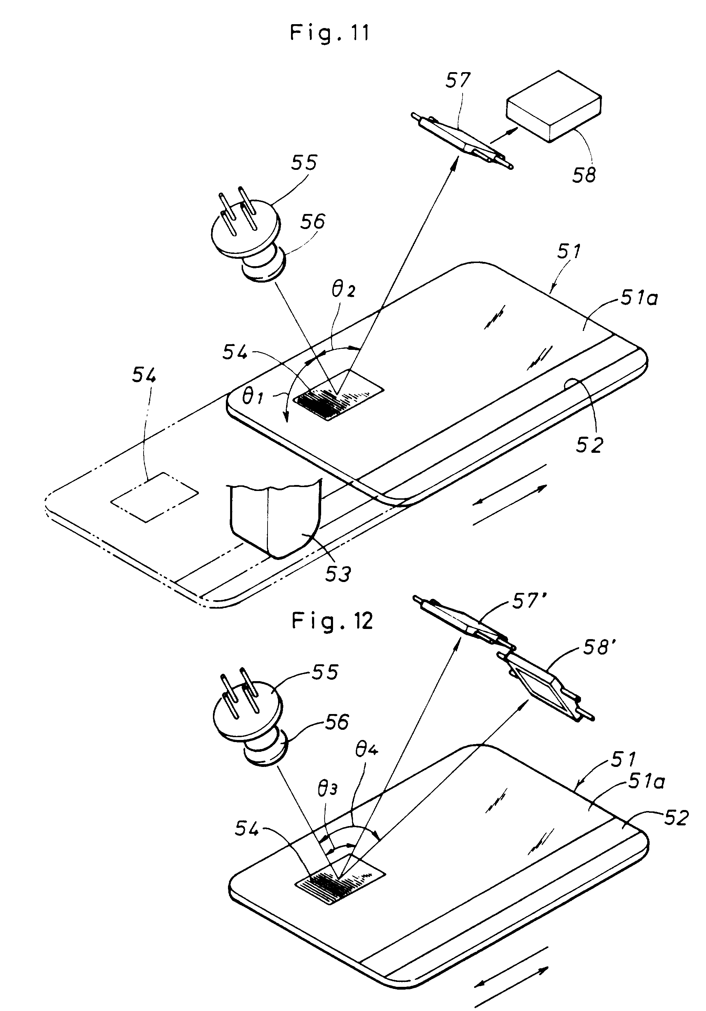

Referring to Figure 11, a card 51 is conveyed in the direction indicated by the arrows or substantially laterally as seen in Figure 11 by means of conveyer rollers or the like not shown in the drawings, and a magnetic head 53 writes into and reads out of a magnetic stripe 52 provided on a major surface 51a of the card 51 when it has reached such a position. A diffraction grating region 54 is provided in a suitable location of a major surface 51a of the card 51. This diffraction grating region 54 consists of numerous grooves having a density of several hundred grooves per mm to several thousand grooves per mm, and reflects incident light projected thereupon at an incident angle of ϑ1 and having a certain wave length into reflected light at a reflective angle of ϑ2 with respect to the incident light.

The reader/writer is provided with a light emitting element 55 as a means for projecting laser light perpendicularly upon the major surface 51a thereof upon the diffraction grating region 54 from a certain distance away therefrom. This light emitting element 55 projects illuminating light upon the diffraction grating region 54 at an angle 81 when the card 51 is at the location indicated by the solid lines in Figure 11. A lens 56 is interposed between the diffraction grating region 54 and the light emitting element 55 to convert the light emitted from the light emitting element 55 into a parallel beam of light directed upon the diffraction grating region 54. Further, a light receiving element 57 consisting of a photodiode is disposed at a position for receiving the light emitted from the light emitting element 55 and reflected by the diffraction grating region 54. An identification circuit 58 is connected to the light receiving element 57 to determine the authenticity of each card.

In carrying out such a card identification process, the card 51 is inserted in the card reader/writer, and illuminating light from the light emitting element 55 is projected upon the diffraction grating region 54. The authenticity of the card 51 can be identified when the light reflected by the diffraction grating region 54 is collected by the light receiving element 57, and its intensity is detected to be of a certain level by the identification circuit 58. Therefore, even when a forger obtained such a card, not only it would be difficult for him to analyze the diffraction grating but also a significant cost is required to fabricate an identical diffraction grating. Thereby, it offers a strong discouraging effect upon potential forgers.

Figure 12 is a view similar to Figure 11, and like parts in these drawings are denoted with like numerals without repeating detailed description thereof. According to this system, the light emitting element 55 incorporates therein a pair of light sources having different wave lengths, and for instance may consist of a two-wave length laser device incorporating a plurality of chips in a single package. Further, a pair of light receiving elements 57′ and 58′ are provided at positions which are at certain angles ϑ3 and ϑ4, respectively, with respect to the central axial line of the illuminating light so as to correspond to the respective wave lengths of the illuminating light and at a certain distance away from the diffraction grating region 54. Thus, according to this embodiment, the card 51 is identified to be authentic only when the intensities of the light received by the light receiving elements 57′ and 58′, respectively, are both higher than a certain prescribed level. This system is otherwise similar to that shown in Figure 11.

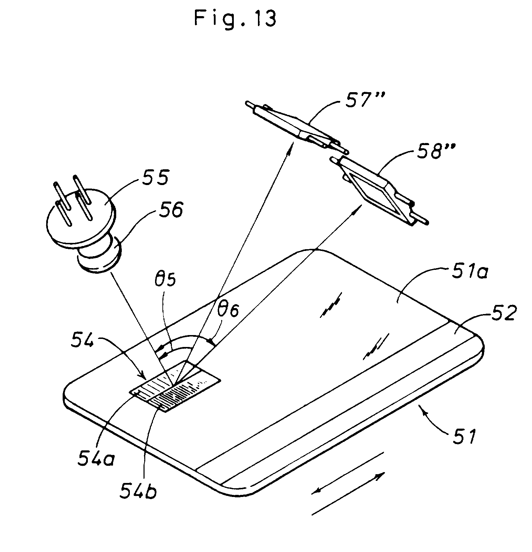

Figure 13 is a view similar to Figures 11 and 12. In this system, the diffraction grating region 54 provided on the major surface 51a of the card 51 is divided into two diffraction grating parts 54a and 54b having different reflective properties. Light receiving elements 57˝ and 58˝ are placed in the card reader/writer so as to correspond to the diffraction grating parts 54a and 54b, respectively, or at angles ϑ4 and ϑ5, respectively, wIth respect to the central optical line of the illuminating light, and spaced from the diffraction grating region 54.

Thus, according to this system, the illuminating light emitted from the light emitting element 55 and reflected by the diffraction grating region 54 is received by the light receiving elements 57˝ and 58˝, and the card 51 is identified to be authentic only when the intensities of the light received by the light receiving elements 57˝ and 58˝, respectively, are both higher than a certain prescribed level. Therefore, this system has an even stronger discouraging effect on potential forgers of the card. This system is otherwise similar to those shown in Figures 11 and 12.

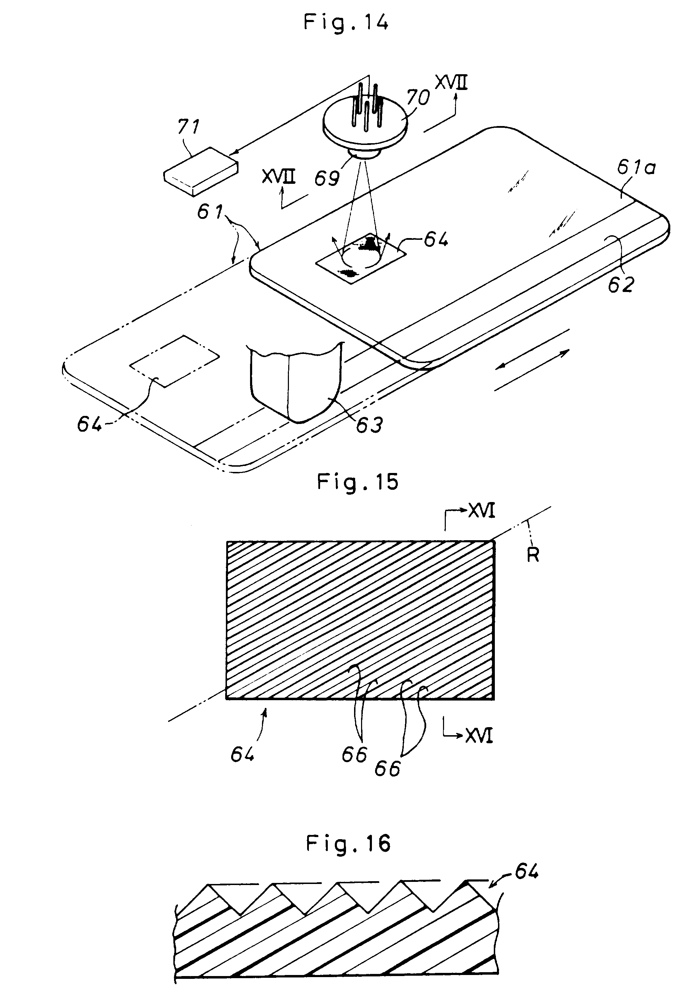

Referring to Figures 14 showing a first embodiment of the present invention, a card 61 is conveyed in the direction indicated by the arrows or substantially laterally as seen in Figure 14 by means of conveyer rollers or the like not shown in the drawings, and a magnetic head 63 writes into and reads out of a magnetic stripe 62 provided on a major surface 61a of the card 61 when it has reached such a position. An identification region 64 is provided in a suitable location of the major surface 61a of the card 61. As illustrated in Figures 15 and 16, this identification region 64 consists of a large number of parallel V-grooves 66 extending in the direction indicated by the imaginary line R at the density of several grooves per mm to several hundred grooves per mm.

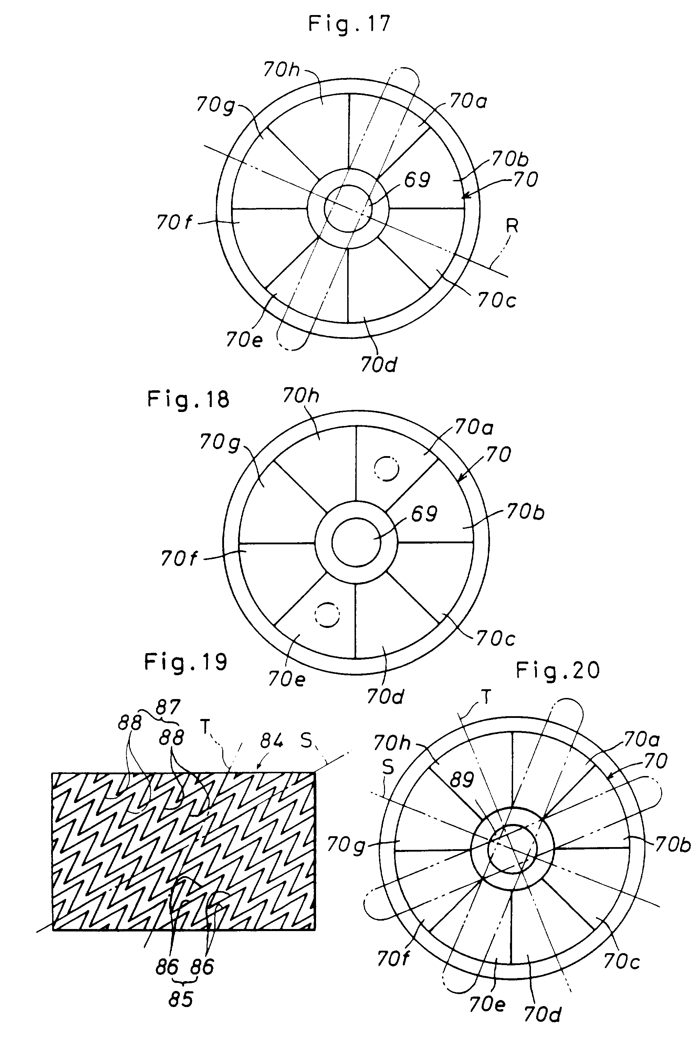

The reader/writer is provided with a light emitting element 69 as a means for projecting laser light perpendicularly to the major surface 61a thereof upon the identification region 64 from a certain distance away therefrom when the card 61 has reached the position indicated by the solid lines in Figure 14. A light receiving element 70 consisting of a multi-region photodiode comprising a large number of light receiving surfaces 70a through 70h surrounding the light emitting element 69 is provided as illustrated in Figure 17. An identification circuit 71 is connected to the light receiving element 70 to determine the authenticity of each card.

In carrying out such a card identification process, the card 61 inserted in the card reader/writer is retained perpendicularly to the light emitting element 69, and illuminating light from the light emitting element 69 is projected upon the identification region 64. The authenticity of the card 61 can be identified when the light reflected by the identification region 64 impinges upon the light receiving surfaces 70a and 70e of the light receiving element 70 as illustrated in Figure 17, or as an elliptic pattern extending perpendicularly to the direction of the (imaginary line R) of the grooves 66, and this is detected by comparing the positional relationships of those light receiving surfaces (the light receiving surfaces 70a and 70e) receiving light of high intensity. Therefore, even when a forger obtained such a card, not only it would be difficult for him to analyze the identification region but also a significant cost is required to fabricate an identical identification region. Thereby, it offers a strong discouraging effect upon potential forgers.

Figure 18 shows a second embodiment of the present invention. In this embodiment, the identification region consists of a diffraction grating region having a large number of grooves at the density of several thousand grooves per mm, and is designed to converge the light from the light emitting element 69, for instance, on parts 70a and 70e as spots of light.

Figures 19 and 20 are views similar to Figures 15 and 16, respectively, to show a third embodiment of the present invention. In this embodiment, the identification region 84 consists of a combination of a first set 85 of parallel V-grooves 86 extending in the direction of the imaginary line S and a second set 87 of parallel V-grooves 88 extending in the direction of the imaginary line T which is different from the aforementioned direction. Accordingly, the authenticity of the car 61 can be identified when the light reflected by the identification region 64 impinges upon the light receiving surfaces 70a through 70h of the light receiving element 70 as a pair of elliptic patterns extending perpendicularly to the directions (imaginary lines S and T) of the grooves 86 and 88 as illustrated in Figure 20, and this is detected by comparing the positional relationships of those light receiving surfaces (the light receiving surfaces 70a, 70e, 70b and 70f) receiving light of high intensity. This embodiment is otherwise similar to the second embodiment.

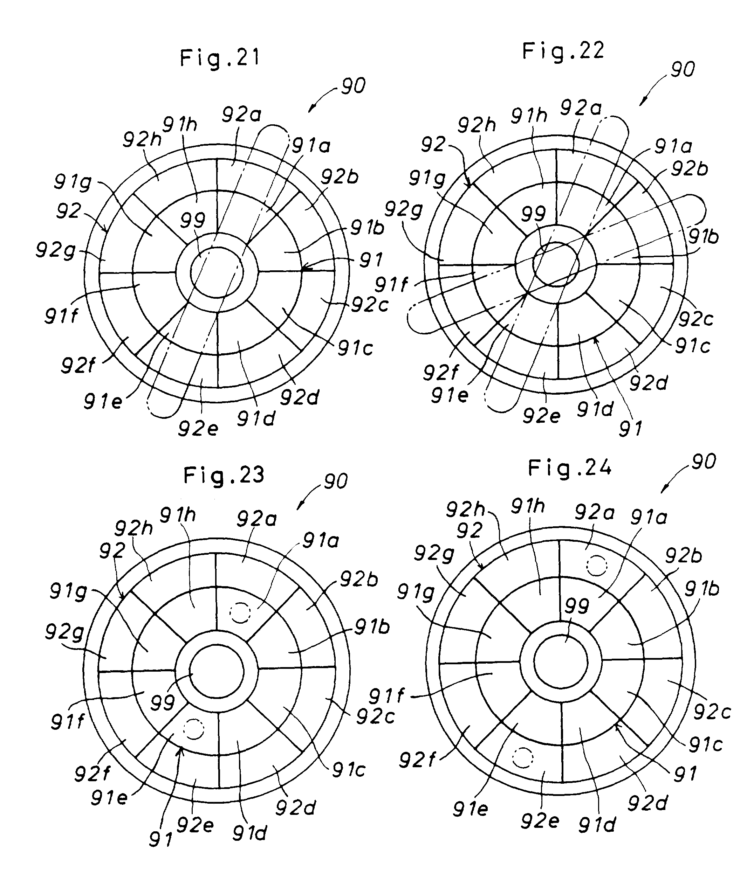

Figure 21 through 24 show a fourth embodiment of the present invention. According to this embodiment, the light receiving element 90 comprises a first set 91 of light receiving surfaces 91a through 91h surrounding the light emitting element 99, and a second set 92 of light receiving surfaces 92a through 92h. Therefore, this embodiment can not only identify identification patterns like those of the first and third embodiments as illustrated in Figures 21 and 22 by using a multiplicity of parallel grooves but also allows a greater variation of the identification patterns to increase the difficulty of forging the card. When a diffraction grating region is used instead of a grooves, corresponding light spots are formed, for instance, on the light receiving surfaces 91a and 91e of the first set 91 of the light receiving element 90 or on the light receiving surfaces 92a and 92e of the second set 92 surrounding the first set 91 as illustrated in Figure 23 or 24, as the case may be. This embodiment also allows a certain amount of information to be individually written into the identification region of the card beside from the normal carrier of information of the information storage card, and to be read out therefrom.

Obviously, the present invention is not limited by the above embodiments but there are other possible variations. For instance, although the illuminating light was projected from the light emitting element upon the identification region with a lens interposed therebetween in the above described embodiments, mirrors and prisms may be placed in the light path to change the direction of the light path. A photodiode was used as the light receiving element in the above embodiments, but a position sensing device (PSD) may also be used. A position sensing device consists of a semiconductor device comprising a high resistivity Si i-layer, a p-layer formed on one side thereof or on its light receiving surface, and a n-layer formed on the other side of the i-layer, and a current proportional to the position of a light spot projected on the light receiving surface is produced from electrodes provided on the light receiving surface. Further, although a reflection type identification region was formed on the major surface of the card in the foregoing embodiments, it is also possible to place a similar region on both the surfaces of the card, or to form a transmission type identification region by providing a transparent part in a part of the card.

Although the present invention has been described in terms of specific embodiments, it is possible to modify and alter details thereof without departing from the scope of the present invention.

## Claims

1. A system for determining authenticity of an information storage card (1) comprising an information carrier which can store information in coded form so as to be accessed by a card reader/writer:
the card carrying, in addition to the information carrier, an identification region consisting of diffraction grating;
the reader/writer comprising:
light emitting means (5) for projecting incident light upon the identification region carried by said card;
light receiving means (7) for detecting light reflected by the identification region; and
identification circuit (8) for evaluating the light received by the light receiving means (7) and producing a signal for indicating authenticity of said card;
characterized in that the light receiving means (7) consists of a plurality of separate light receiving parts arranged around the light emitting means (5) along a common circle centered around the light emitting means (5) and each capable of individually detecting the intensity of light received thereby.

2. A system according to claim 1, wherein the light receiving parts are arranged around the light emitting means (5) along at least two concentric circles concentric to the light emitting means (5).

## Patentansprüche

1. System zum Erkennen der Echtheit einer Informationsspeicherkarte (1) mit einem Informationsträger, der Informationen in codierter Form derart abspeichern kann, daß diese für einen Kartenleser bzw.-Schreiber zugänglich sind, wobei die Karte außer dem Informationsträger einen Identifikationsbereich aufweist, der aus einem Beugungsgitter besteht, wobei der Leser/Schreiber umfaßt:
einen Lichtemitter (5) zum Projizieren von Licht, das auf den Identifikationsbereich einfällt, der von der Karte getragen ist, einen Lichtaufnehmer (7) zum Erfassen von Licht, das vom Identifikationsbereich reflektiert wurde sowie eine Identifikationsschaltung (8) zum Auswerten des vom Lichtaufnehmer (7) aufgenommenen Lichtes sowie zum Erzeugen eines Signales, um die Echtheit der Karte anzuzeigen,
dadurch gekennzeichnet, daß der Lichtaufnehmer (7) aus einer Mehrzahl separater Lichtaufnehmerteile besteht, die rundum den Lichtemitter (5) entlang einem gemeinsamen Kreis um den Lichtemitter (5) herum zentriert sind, und deren jeder dazu in der Lage ist, die Intensität des hierbei aufgenommenen Lichtes zu erfassen.

2. System nach Anspruch 1, wobei die lichtaufnehmenden Teile um den Lichtemitter (5) entlang wenigstens zweier konzentrischer Kreise angeordnet sind, die zum Lichtemitter (5) konzentrisch sind.

## Revendications

1. Système conçu pour déterminer l'authenticité d'une carte de stockage des informations (1) comprenant un porteur d'informations qui peut stocker des informations sous forme codée de telle sorte qu'un dispositif de lecture/écriture de carte puisse y accéder ; la carte portant, outre le porteur d'informations, une zone d'identification constituée d'un treillis de diffraction ; le dispositif de lecture/écriture comprenant :
un moyen émetteur de lumière (5) pour projeter une lumière incidente sur la zone d'identification portée par ladite carte ; un moyen de réception de la lumière (7) pour détecter la lumière reflétée par la zone d'identification ;
et un circuit d'identification (a) pour évaluer la lumière reçue par le moyen de réception de la lumière (7) et produire un signal pour indiquer l'authenticité de ladite carte ;
caractérisé en ce que le moyen de réception de la lumière (7) est constitué de plusieurs parties séparées recevant la lumière disposées autour du moyen émetteur de lumière (5) le long d'un cercle commun centre autour du moyen émetteur de lumière (5), chacune étant capable de détecter individuellement l'intensité de la lumière reçue par elle.

2. Système selon la revendication 1, dans lequel les parties recevant la lumière sont disposées autour au moyen émetteur de lumiere (5) le long d'au moins deux cercles concentriques entre eux et avec le moyen émetteur de lumière (5).
